# EUROPEAN PATENT APPLICATION

(11) **EP 4 024 312 A1**
(43) Date of publication of application: **06.07.2022**
(21) Application number: 19943242.8
(22) Date of filing: 29.08.2019
(51) Int. Cl.: G06Q 30/02

(54) **PATTERN EXTRACTION PROGRAM, DEVICE, AND METHOD**

(71) Applicant: FUJITSU LIMITED, Kawasaki-shi, Kanagawa 211-8588 (JP)
(72) Inventor: IWASHITA, Hiroaki, Kawasaki-shi, Kanagawa 211-8588 (JP); GOTO, Keisuke, Kawasaki-shi, Kanagawa 211-8588 (JP); Ohori, Kotaro, Kawasaki-shi, Kanagawa 211-8588 (JP)
(74) Representative: Hoffmann Eitle
(86) International application number: PCT/JP2019/033949
(87) International publication number: WO 2021/038801

(57) **Abstract**

By acquiring sample set data associated with both of attribute values individually related to a plurality of attributes and label information indicating whether or not a reaction in response to an action is successful; acquiring a plurality of combination patterns, each of which is a combination of one or more of the attribute values; determining evaluation values for each of the plurality of combination patterns, based on the number of samples that satisfy each of the combination patterns among the samples indicated by the sample set data and the ratio of samples of successful cases among the samples that satisfy each of the combination patterns; and extracting a combination pattern that corresponds to an evaluation value that has a local maximum value in the evaluation values individually related to the plurality of combination patterns, a combination pattern of the attribute values adapted to allow information on a segment that is useful from the marketing perspective to be obtained is extracted.

## Description

### FIELD

The disclosed technique relates to a pattern extraction program, a pattern extraction device, and a pattern extraction method.

### BACKGROUND

In the field of marketing, "segmentation" is performed to subdivide a group of customers by a combination of attributes according to marketing needs. Each set of subdivided customers is called a "segment", and the customers contained in each segment have common attributes. Information on the segment is used to, for example, narrow down business targets and use diverse business strategies suitably.

### CITATION LIST

### NON-PATENT DOCUMENT

Non-Patent Document 1: "What is Market Segmentation?", [online], [Searched on August 21, The First Year of Reiwa], Internet <https://www.qualtrics.com/experience-management/brand/what-is-market-segmentation/>

### SUMMARY

### [TECHNICAL PROBLEM]

In order to obtain information on segments that is useful from a marketing perspective, a group of customers' needs to be appropriately segmented according to marketing needs.

As one aspect, the disclosed technique aims to extract a combination pattern of attribute values adapted to allow information on segments that is useful from a marketing perspective to be obtained.

### [SOLUTION TO PROBLEM]

In one mode, the disclosed technique acquires sample set data associated with both of data item values individually related to a plurality of data items and label information regarding a predetermined event. In addition, the disclosed technique acquires a plurality of combination patterns, each of which is a combination of one or more of the data item values. Then, the disclosed technique determines evaluation values for each of the plurality of combination patterns. The evaluation values are determined based on the number of the samples that satisfy each of the combination patterns among the samples indicated by the sample set data and the ratio of the samples whose label information indicates a predetermined value among the samples that satisfy each of the combination patterns. Furthermore, the disclosed technique extracts one of the combination patterns that corresponds to one of the evaluation values that has a local maximum value in the evaluation values individually related to the plurality of combination patterns.

### [ADVANTAGEOUS EFFECTS OF INVENTION]

As one aspect, there is an effect that a combination pattern of attributes adapted to allow information on segments that is useful from a marketing perspective to be obtained may be extracted.

### BRIEF DESCRIPTION OF DRAWINGS

FIG. 1 is a functional block diagram of a pattern extraction device according to first and second embodiments.
FIG. 2 is a diagram for explaining a segment.
FIG. 3 is a diagram for explaining the extraction of a combination pattern whose evaluation value has a local maximum value in the first embodiment.
FIG. 4 is a diagram for explaining the extraction of combination patterns by association analysis.
FIG. 5 is a block diagram illustrating a schematic configuration of a computer that functions as the pattern extraction device according to the first and second embodiments.
FIG. 6 is a flowchart illustrating an example of pattern extraction processing in the first embodiment.
FIG. 7 is a diagram for explaining the pattern extraction processing in the first embodiment.
FIG. 8 is a diagram for explaining pattern extraction processing in the second embodiment.
FIG. 9 is a diagram for explaining the pattern extraction processing in the second embodiment.
FIG. 10 is a flowchart illustrating an example of the pattern extraction processing in the second embodiment.

### DESCRIPTION OF EMBODIMENTS

Hereinafter, an example of embodiments according to the disclosed technique will be described with reference to the drawings.

### <First Embodiment

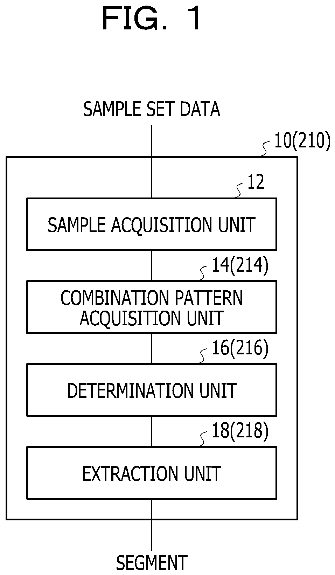

As illustrated in FIG. 1, sample set data is input to a pattern extraction device 10. The sample set data is data indicating a set of samples associated with both of data item values individually related to a plurality of data items and label information regarding a predetermined event.

For example, when each sample is relevant to a customer, the "plurality of data items" denotes attributes of the customer, which, for example, can be assumed as gender, age, unmarried/married, occupation, and the like. The "data item values" in this case denote attribute values related to each attribute. For example, male and female can be assumed for the attribute "gender", 20s, 30s, 40s,... can be assumed for the attribute "age", being unmarried and married can be assumed for the attribute "unmarried/married", and a company employee, self-employed,... can be assumed for the attribute "occupation".

In addition, the "label information regarding a predetermined event" in the present embodiment denotes information indicating whether or not a reaction in response to an external influence (action) is as expected. In the following, it is assumed that a sample that makes a reaction as expected in response to an action is called a "successful case", a sample that does not make a reaction as expected is called a "failed case", and the label information indicating success or failure is correlated with each sample.

The pattern extraction device 10 executes pattern extraction processing to extract segments from the sample set data and output the extracted segments.

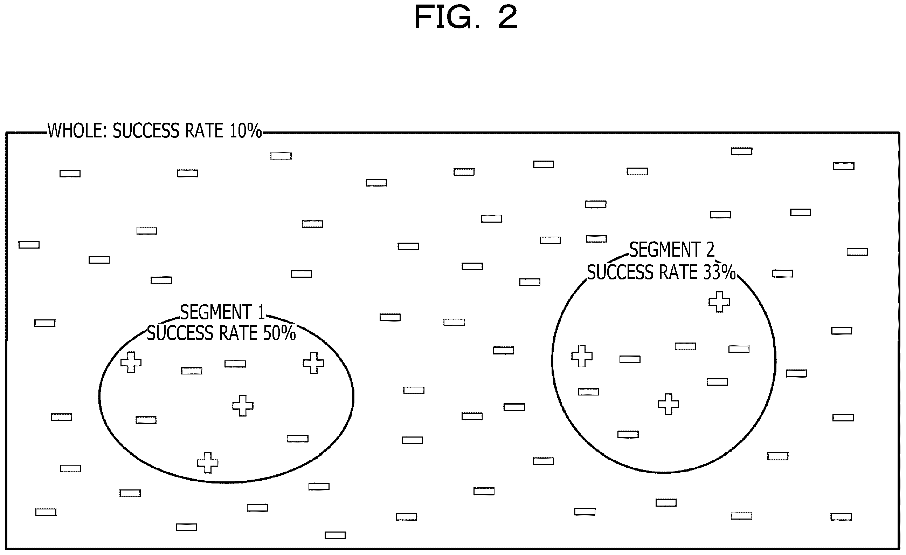

Here, the segment in the present embodiment will be described. As illustrated in FIG. 2, the "segment" denotes a group of samples having similar high success rates for an action expressed by a combination pattern of attribute values that each of these samples has in common. In the example in FIG. 2, the white plus (+) and minus (-) marks represent individual samples, where the sample represented by the plus mark denotes the successful case, and the sample represented by the minus mark denotes the failed case. In the sample set as illustrated in FIG. 2, a set of samples having a combination pattern of certain attribute values in common denotes the "segment". In addition, the ratio of successful cases among the samples contained in the segment is called the "success rate" of that segment.

For example, as illustrated in FIG. 2, when the set of samples having a combination pattern of certain attribute values in common is assumed as a segment 1, the number of samples contained in the segment 1 is eight, of which four are successful cases. Accordingly, the success rate of the segment 1 is "50%". In addition, when the set of samples having a combination pattern of different attribute values in common is assumed as a segment 2, the number of samples contained in the segment 2 is nine, of which three are successful cases. Accordingly, the success rate of the segment 2 is "33%".

Functionally, as illustrated in FIG. 1, the pattern extraction device 10 includes a sample acquisition unit 12, a combination pattern acquisition unit 14, a determination unit 16, and an extraction unit 18.

The sample acquisition unit 12 acquires the sample set data input to the pattern extraction device 10 and passes the acquired sample set data to the combination pattern acquisition unit 14.

The combination pattern acquisition unit 14 acquires a combination of one or more attribute values selected from among a plurality of attribute values that each sample contained in the sample set data has, as a combination pattern. Specifically, the combination pattern acquisition unit 14 acquires the combination pattern by adding and deleting the attribute value of another attribute to and from the attribute value selected from an initial attribute value set, which is a set of attribute values selected at the beginning. The initial attribute value set can be assumed as a set of attribute values of attributes whose attribute values have an exclusive relationship, such as gender, unmarried/married, and the like (for example, {male, female, unmarried, married}).

The combination pattern acquisition unit 14 passes the acquired combination pattern of the attribute values to the determination unit 16.

The determination unit 16 determines the evaluation value for each combination pattern passed from the combination pattern acquisition unit 14. The determination unit 16 determines the evaluation value based on the number of samples that satisfy the combination pattern among samples indicated by the sample set data and the ratio of samples whose label information indicates a predetermined value among the samples that satisfy the combination pattern. The number of samples that satisfy the combination pattern denotes the number of samples having a combination of attribute values indicated by the combination pattern and represents the size of the set that satisfies the combination pattern. The samples whose label information indicates a predetermined value denotes the successful cases. For example, the ratio of the samples whose label information indicates a predetermined value among samples that satisfy the combination pattern denotes the success rate in the set that satisfies the combination pattern.

Specifically, the determination unit 16 determines, for each combination pattern, the evaluation value having the property of increasing as the success rate becomes higher when the size of the group is kept unchanged, and increasing as the group becomes greater when the success rate is kept unchanged. As the evaluation value, for example, a chi-square value (X²) can be used. The determination unit 16 passes the evaluation value determined for each combination pattern to the extraction unit 18.

The extraction unit 18 chooses a combination pattern having a great evaluation value passed from the determination unit 16 such that samples contained in sets that satisfy that combination pattern do not have a large overlap and extracts the chosen combination pattern as a segment.

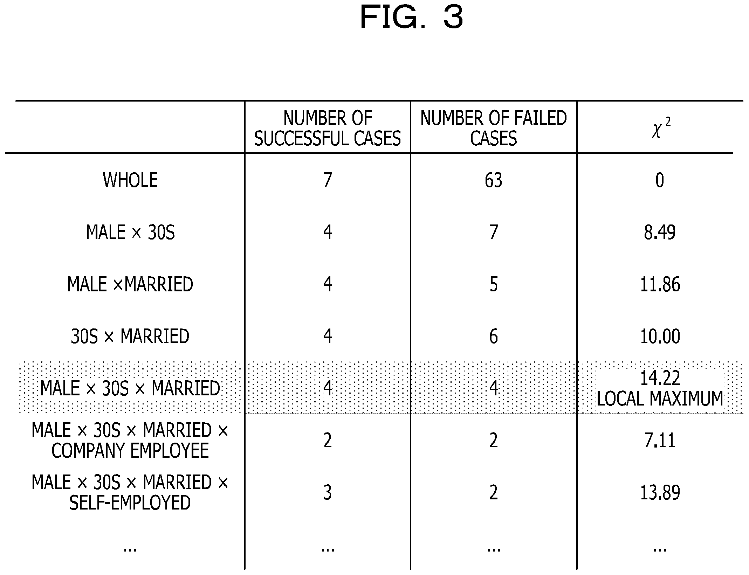

Specifically, the extraction unit 18 extracts a combination pattern that corresponds to an evaluation value that has a local maximum value in the evaluation values individually related to a plurality of combination patterns. More specifically, as illustrated in FIG. 3, in regard to the evaluation value for a specified combination pattern, the extraction unit 18 acquires the evaluation value for a combination pattern obtained by adding one or more data item values to the specified combination pattern, from among the plurality of combination patterns. In addition, the extraction unit 18 acquires the evaluation value for a combination pattern obtained by deleting one or more data item values from the specified combination pattern. When the evaluation value of the specified combination pattern is higher than any of the acquired evaluation values, the extraction unit 18 extracts the specified combination pattern as a combination pattern whose evaluation value has a local maximum value.

For example, the extraction unit 18 extracts a combination pattern whose evaluation value determined by the determination unit 16 is reduced when one or more attribute values are added and one or more attribute values are deleted, from among the combination patterns acquired by the combination pattern acquisition unit 14. The extraction unit 18 outputs the extracted combination pattern as a segment.

By extracting a combination pattern whose evaluation value having the property as described above has a local maximum value, a segment that may not be found by usual association analysis may be found.

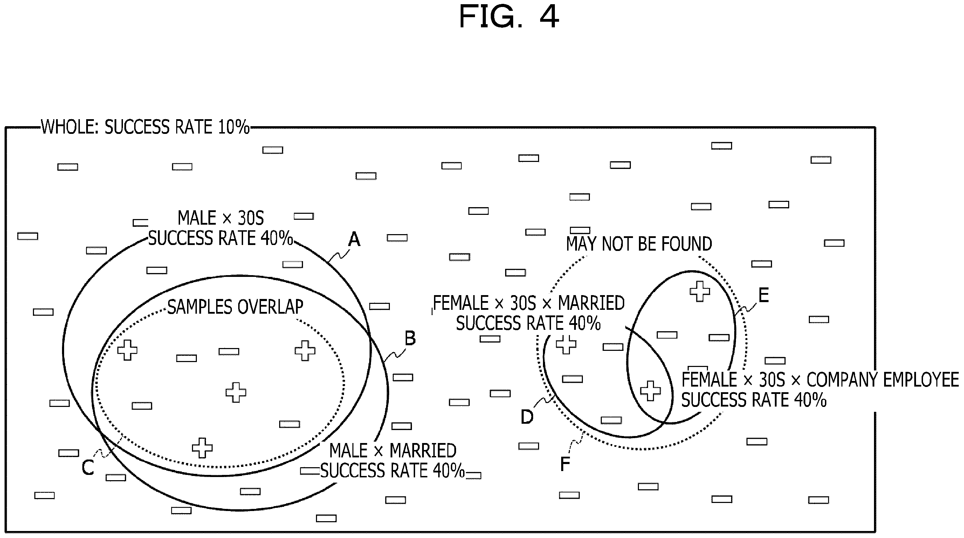

For example, as illustrated in FIG. 4, it is assumed that the success rates of sets for each of various combination patterns of attribute values is worked out by the association analysis, and a combination pattern corresponding to a set with a success rate equal to or greater than a set threshold value (40% in the example in FIG. 4) is extracted as a segment. In this case, as in the sets A and B in FIG. 4, samples will overlap (the part of the broken line C), and sets with similar combination patterns will be extracted, which will end up with an extraction result with poor comprehensiveness with respect to the whole.

On the other hand, by extracting a set that satisfies the combination pattern whose evaluation value has a local maximum value using the evaluation value as in the present embodiment, a combination pattern corresponding to a set having a high success rate and a great number of samples may be extracted. In addition, when a plurality of segments is extracted, the comprehensiveness with respect to the whole may be improved because the local maximum values are rarely adjacent to each other.

Furthermore, when a combination pattern corresponding to a set having a success rate equal to or greater than a set threshold value is extracted as a segment, an appropriate segment is not regularly extracted because the extraction result depends on the threshold value setting. For example, as illustrated in FIG. 4, when the threshold value of the success rate is assumed as 40%, the sets D and E are extracted. When the success rate of the set F including the sets D and E is less than 40%, the set F is not extracted as a segment even if the set F is an appropriate set from the marketing perspective.

On the other hand, in the present embodiment, by extracting a set that satisfies a combination pattern that has a high success rate and a local maximum value of the evaluation value that increases as the number of samples becomes greater, an appropriate segment may be extracted without depending on the threshold value of the success rate.

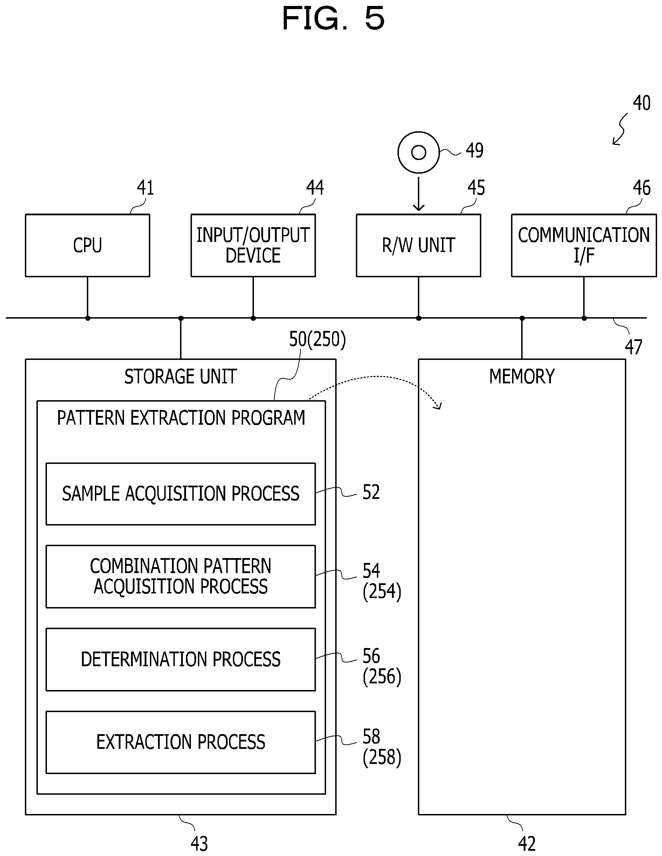

The pattern extraction device 10 can be implemented, for example, by a computer 40 illustrated in FIG. 5. The computer 40 includes a central processing unit (CPU) 41, a memory 42 as a temporary storage area, and a nonvolatile storage unit 43. In addition, the computer 40 includes an input/output device 44 such as an input unit and a display unit, and a read/write (R/W) unit 45 that controls reading and writing of data from and to a storage medium 49. Furthermore, the computer 40 includes a communication interface (I/F) 46 connected to a network such as the Internet. The CPU 41, the memory 42, the storage unit 43, the input/output device 44, the R/W unit 45, and the communication I/F 46 are interconnected via a bus 47.

The storage unit 43 may be implemented by a hard disk drive (HDD), a solid state drive (SSD), a flash memory, or the like. The storage unit 43 as a storage medium stores a pattern extraction program 50 for making the computer 40 function as the pattern extraction device 10. The pattern extraction program 50 includes a sample acquisition process 52, a combination pattern acquisition process 54, a determination process 56, and an extraction process 58.

The CPU 41 reads the pattern extraction program 50 from the storage unit 43, develops the read pattern extraction program in the memory 42, and sequentially executes the processes included in the pattern extraction program 50. The CPU 41 executes the sample acquisition process 52 to operate as the sample acquisition unit 12 illustrated in FIG. 1. In addition, the CPU 41 executes the combination pattern acquisition process 54 to operate as the combination pattern acquisition unit 14 illustrated in FIG. 1. Furthermore, the CPU 41 executes the determination process 56 to operate as the determination unit 16 illustrated in FIG. 1. Additionally, the CPU 41 executes the extraction process 58 to operate as the extraction unit 18 illustrated in FIG. 1. This will cause the computer 40 executing the pattern extraction program 50 to function as the pattern extraction device 10. Note that the CPU 41 that executes the program is hardware.

In addition, the function that is implemented by the pattern extraction program 50 can be implemented by, for example, a semiconductor integrated circuit, in more detail, an application specific integrated circuit (ASIC) or the like.

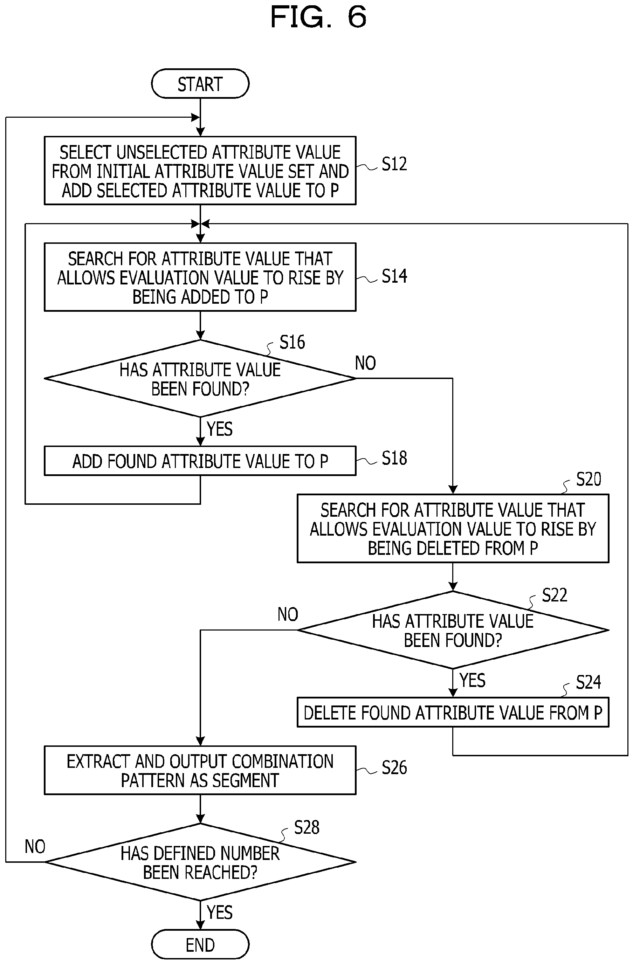

Next, the performance of the pattern extraction device 10 according to the first embodiment will be described. The sample acquisition unit 12 acquires the sample set data input to the pattern extraction device 10 and passes the acquired sample set data to the combination pattern acquisition unit 14. Then, the pattern extraction device 10 executes the pattern extraction processing illustrated in FIG. 6. Note that the pattern extraction processing is an example of a pattern extraction method of the disclosed technique.

In step S12, the combination pattern acquisition unit 14 selects an unselected attribute value from the initial attribute value set and acquires a combination pattern P made up of the selected attribute value to pass the acquired combination pattern P to the determination unit 16. Then, the determination unit 16 specifies a set of samples having the attribute values indicated by the passed combination pattern P and determines the evaluation value based on the number of samples and the success rate of the specified set.

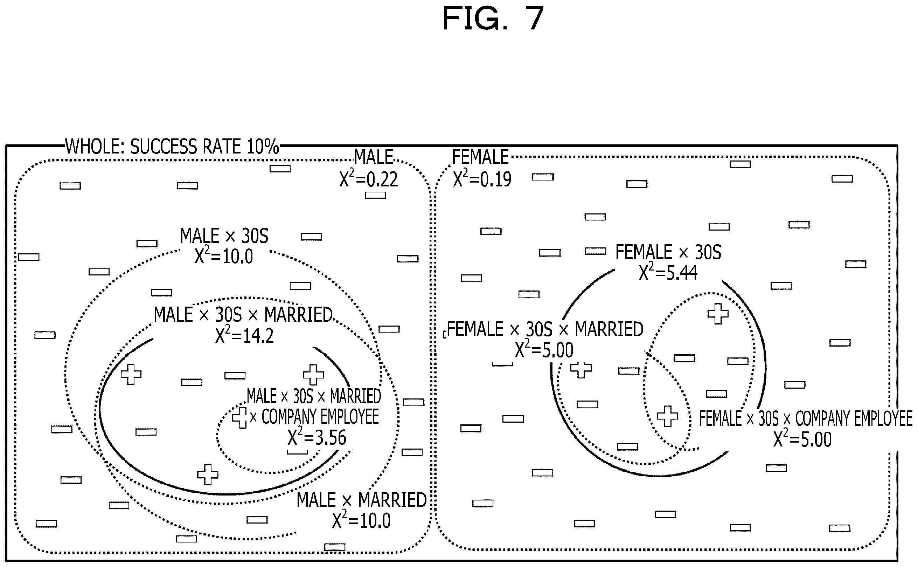

Here, it is assumed that the initial attribute value set is {male, female, unmarried, married}, from which "male" is selected, and as illustrated in FIG. 7, X² as an example of the evaluation value is determined to be 0.22 for the combination pattern P = [male].

Next, in step S14, the combination pattern acquisition unit 14 acquires a combination pattern obtained by adding one attribute value of another attribute to the current combination pattern P and passes the acquired combination pattern to the determination unit 16. Then, the determination unit 16 determines the evaluation value of the passed combination pattern and passes the determined evaluation value to the extraction unit 18. Then, the extraction unit 18 searches for an attribute value that allows the evaluation value to rise by being added, by verifying whether or not the determined evaluation value rises higher than the evaluation value related to the combination pattern P.

Next, in step S16, the extraction unit 18 verifies whether or not an attribute value that allows the evaluation value to rise by being added has been found in step S14 above. When the attribute value has been found, the processing proceeds to step S18, and when the attribute value has not been found, the processing proceeds to step S20.

In step S18, the combination pattern acquisition unit 14 acquires a combination pattern obtained by adding the attribute value that allows the evaluation value to rise by being added, to the current combination pattern P, as a new combination pattern P and passes the acquired combination pattern to the determination unit 16. Then, the determination unit 16 determines the evaluation value of the passed combination pattern P, and the processing returns to step S14.

For example, as illustrated in FIG. 7, assuming that X² of the combination pattern [male × 30s] obtained by adding the attribute value "30s" of the attribute "age" to the current combination pattern P = [male] is 10.0, X² of the combination pattern [male × 30s] rises higher than X² = 0.22 of the combination pattern P = [male]. Therefore, the new combination pattern P = [male × 30s] is employed.

Then, returning to step S14, assuming that X² of a combination pattern obtained by adding the attribute value "married" of the attribute "unmarried/married" to the current combination pattern P = [male × 30s] is 14.2, X² rises. Therefore, the new combination pattern P = [male × 30s × married] is employed.

When no more attribute value that allows the evaluation value to rise by being added has been found, the processing proceeds to step S20 with the current combination pattern P = [male × 30s × married] maintained.

In step S20, the combination pattern acquisition unit 14 acquires a combination pattern obtained by deleting one attribute value from the current combination pattern P and passes the acquired combination pattern to the determination unit 16. Then, the determination unit 16 determines the evaluation value of the passed combination pattern and passes the determined evaluation value to the extraction unit 18. Then, the extraction unit 18 searches for an attribute value that allows the evaluation value to rise by being deleted, by verifying whether or not the determined evaluation value rises higher than the evaluation value related to the combination pattern P.

Next, in step S22, the extraction unit 18 verifies whether or not an attribute value that allows the evaluation value to rise by being deleted has been found in step S20 above. When the attribute value has been found, the processing proceeds to step S24, and when the attribute value has not been found, the processing proceeds to step S26.

In step S24, the extraction unit 18 acquires a new combination pattern P by deleting the attribute value that allows the evaluation value to rise by being deleted, from the current combination pattern P and passes the acquired combination pattern P to the determination unit 16. Then, the determination unit 16 determines the evaluation value of the passed combination pattern P, and the processing returns to step S14.

For example, as illustrated in FIG. 3, X² of the combination pattern [male × 30s] obtained by deleting the attribute value "married" from the current combination pattern P = [male × 30s × married] is 8.49. In addition, X² of the combination pattern [male × married] obtained by deleting the attribute value "30s" is 11.86, and the X² of the combination pattern [30s × married] obtained by deleting the attribute value "male" is 10.00. The evaluation value of any combination pattern does not rise from the evaluation value of 14.22 for the combination pattern P = [male × 30s × married male]. Therefore, neither attribute value will not be deleted from the current combination pattern P.

In step S26, the extraction unit 18 extracts and outputs the current combination pattern P as a segment.

Next, in step S28, the extraction unit 18 verifies whether or not the number of extracted segments has reached a defined number. When the defined number has not been reached, the processing returns to step S12. In step S12, an attribute value that has not been selected so far is selected from the initial attribute value set. In the case of the above initial attribute value set = {male, female, married, unmarried}, for example, the attribute value "female" is selected. When the number of extracted segments has reached the defined number, the pattern extraction processing ends.

As described above, the pattern extraction device according to the first embodiment calculates an evaluation value based on the number of samples and the success rate of a set that satisfies the combination pattern of attribute values, for each combination pattern and extracts a combination pattern whose evaluation value has a local maximum value, as a segment. This may make it possible to extract a combination pattern of attribute values adapted to allow information on segments that is useful from the marketing perspective to be obtained.

### <Second Embodiment

Next, a second embodiment will be described. Note that, in a pattern extraction device according to the second embodiment, similar parts to those of the pattern extraction device 10 according to the first embodiment are designated by the same reference numerals and detailed description thereof will be omitted.

Functionally, as illustrated in FIG. 1, a pattern extraction device 210 includes a sample acquisition unit 12, a combination pattern acquisition unit 214, a determination unit 216, and an extraction unit 218.

The combination pattern acquisition unit 214 comprehensively acquires a combination pattern of one or more attribute values selected from among a plurality of attribute values that each sample contained in the sample set data has. The combination pattern acquisition unit 214 passes the acquired combination pattern of the attribute values to the determination unit 216.

The determination unit 216 determines an evaluation value similar to the evaluation value in the first embodiment for each combination pattern passed from the combination pattern acquisition unit 214. In addition, when a predetermined successful case is excluded from the sample set by the extraction unit 218 to be described later, the determination unit 216 redetermines the evaluation value of each combination pattern for the sample set after the exclusion.

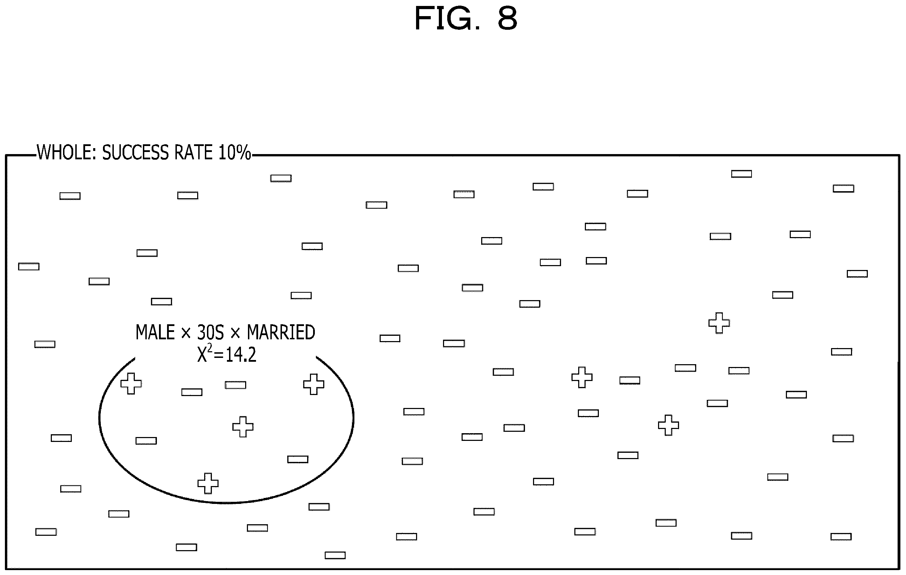

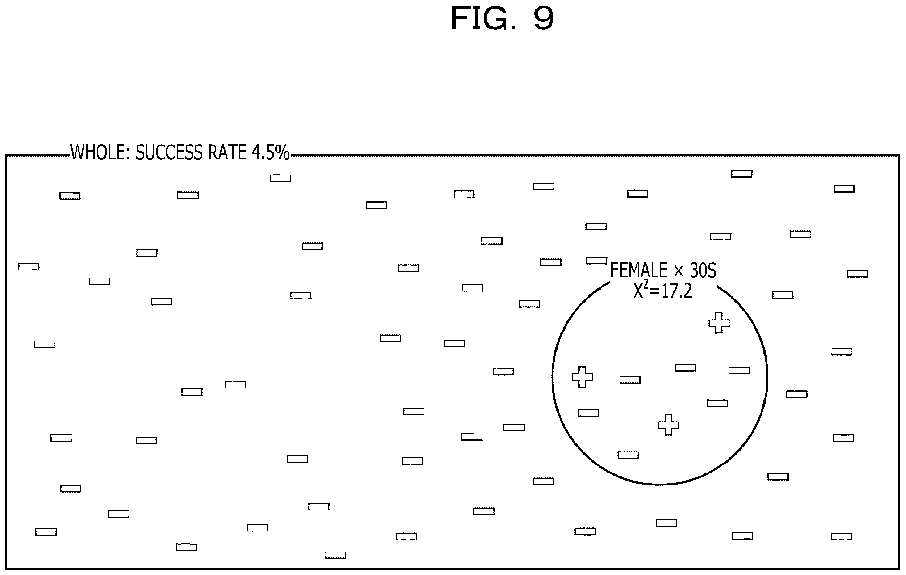

As illustrated in FIG. 8, the extraction unit 218 extracts a combination pattern with the maximum evaluation value determined by the determination unit 216 from among a plurality of combination patterns acquired by the combination pattern acquisition unit 214, as a segment. In addition, as illustrated in FIG. 9, the extraction unit 218 excludes a sample of the successful case among samples that satisfy the combination pattern with the maximum evaluation value from the sample set data and notifies the determination unit 216 of information on the excluded sample. This causes the determination unit 216 to redetermine the evaluation value. When the evaluation value is redetermined by the determination unit 216, the extraction unit 218 repeats extracting the combination pattern with the maximum evaluation value, based on the redetermined evaluation value, as illustrated in FIG. 9.

In this manner, since a combination pattern that is given the maximum evaluation value next is extracted after excluding the successful case of the combination pattern with the maximum evaluation value, substantially, the combination pattern with the evaluation value that has a local maximum value will be extracted.

The pattern extraction device 210 can be implemented, for example, by the computer 40 illustrated in FIG. 5. A storage unit 43 of the computer 40 stores a pattern extraction program 250 for making the computer 40 function as the pattern extraction device 210. The pattern extraction program 250 includes a sample acquisition process 52, a combination pattern acquisition process 254, a determination process 256, and an extraction process 258.

A CPU 41 reads the pattern extraction program 250 from the storage unit 43, develops the read pattern extraction program in a memory 42, and sequentially executes the processes included in the pattern extraction program 250. The CPU 41 executes the sample acquisition process 52 to operate as the sample acquisition unit 12 illustrated in FIG. 1. In addition, the CPU 41 executes the combination pattern acquisition process 254 to operate as the combination pattern acquisition unit 214 illustrated in FIG. 1. Furthermore, the CPU 41 executes the determination process 256 to operate as the determination unit 216 illustrated in FIG. 1. Additionally, the CPU 41 executes the extraction process 258 to operate as the extraction unit 218 illustrated in FIG. 1. This will cause the computer 40 executing the pattern extraction program 250 to function as the pattern extraction device 210. Note that the CPU 41 that executes the program is hardware.

Note that the function implemented by the pattern extraction program 250 can also be implemented by, for example, a semiconductor integrated circuit, in more detail, an ASIC or the like.

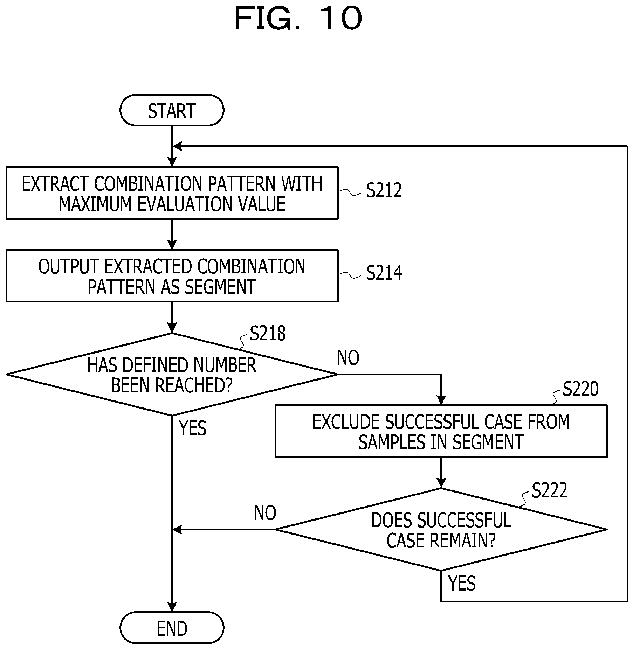

Next, the performance of the pattern extraction device 210 according to the second embodiment will be described. The sample acquisition unit 12 acquires the sample set data input to the pattern extraction device 210 and passes the acquired sample set data to the combination pattern acquisition unit 214. Then, the pattern extraction device 210 executes the pattern extraction processing illustrated in FIG. 10. Note that the pattern extraction processing is an example of the pattern extraction method of the disclosed technique.

In step S212, the combination pattern acquisition unit 214 comprehensively acquires a combination pattern of one or more attribute values selected from among a plurality of attribute values that each sample contained in the sample set data has and passes the acquired combination pattern to the determination unit 216. Then, the determination unit 216 determines the evaluation value for each combination pattern passed from the combination pattern acquisition unit 214 and passes the determined evaluation value to the extraction unit 218. Thereafter, the extraction unit 218 extracts the combination pattern with the maximum evaluation value determined by the determination unit 216.

Next, in step S214, the extraction unit 218 outputs the extracted combination pattern as a segment.

Subsequently, in step S218, the extraction unit 218 verifies whether or not the number of extracted segments has reached a defined number. When the defined number has not been reached, the processing proceeds to step S220, and when the defined number has been reached, the pattern extraction processing ends.

In step S220, the extraction unit 218 excludes a sample of the successful case among samples that satisfy the combination pattern (extracted segment) with the maximum evaluation value extracted in step S212 above, from the sample set data.

Next, in step S222, the extraction unit 218 verifies whether or not a sample of the successful case remains in the sample set data. When a sample of the successful case remains, the extraction unit 218 notifies the determination unit 216 of information on the sample excluded in step S220 above, and the processing returns to step S212. When a sample of the successful case does not remain, the pattern extraction processing ends.

When returning to step S212, repeatedly, the determination unit 216 redetermines the evaluation value of each combination pattern for the sample set after excluding the successful case, and the extraction unit 218 extracts a combination pattern with the maximum evaluation value based on the redetermined evaluation value.

As described above, the pattern extraction device according to the second embodiment calculates an evaluation value based on the number of samples and the success rate of a set that satisfies the combination pattern of attribute values, for each combination pattern and extracts a combination pattern with the maximum evaluation value, as a segment. Then, a sample of the successful case that satisfies the extracted combination pattern is excluded, and the calculation of the evaluation value for each combination pattern and the extraction of the combination pattern with the maximum evaluation value are repeated. This is substantially relevant to extracting the combination pattern whose evaluation value has a local maximum value as in the first embodiment. Therefore, as in the first embodiment, it may be possible to extract a combination pattern of attribute values adapted to allow information on segments that is useful from the marketing perspective to be obtained.

Note that the attributes and attribute values used in each of the above-described embodiments are examples, and other attributes and attribute values may be used.

Furthermore, in each of the above-described embodiments, a mode of the pattern extraction program stored (installed) in advance in the storage unit has been described. However, the embodiment is not limited to the case. The program according to the disclosed technique may also be provided in a form stored in a storage medium such as a compact disc read only memory (CD-ROM), a digital versatile disc read only memory (DVD-ROM), or a universal serial bus (USB) memory.

## Claims

1. A pattern extraction program
for causing a computer to execute processing comprising:
acquiring sample set data associated with both of data item values individually related to a plurality of data items and label information regarding a predetermined event;
acquiring a plurality of combination patterns, each of which is a combination of one or more of the data item values;
determining evaluation values for each of the plurality of combination patterns, based on a number of the samples that satisfy each of the combination patterns among the samples indicated by the sample set data and a ratio of the samples whose label information indicates a predetermined value among the samples that satisfy each of the combination patterns; and
extracting one of the combination patterns that corresponds to one of the evaluation values that has a local maximum value in the evaluation values individually related to the plurality of combination patterns.

2. The pattern extraction program according to claim 1, wherein the evaluation values have a property of increasing as the ratio becomes higher when the number of the samples that satisfy each of the combination patterns is kept unchanged, and increasing as the number of the samples that satisfy each of the combination patterns becomes greater when the ratio is kept unchanged.

3. The pattern extraction program according to claim 1 or 2, wherein, among the plurality of combination patterns, when a specified evaluation value for a specified combination pattern is higher than any of a first evaluation value for a first combination pattern obtained by adding one or more of the data item values to the specified combination pattern, and a second evaluation value for a second combination pattern obtained by deleting one or more of the data item values from the specified combination pattern, the specified combination pattern is extracted as the one of the combination patterns with the one of the evaluation values that has the local maximum value.

4. The pattern extraction program according to claim 1 or 2, which further causes the computer to execute processing comprising:
extracting another one of the combination patterns with another one of the evaluation values that is maximum, as the one of the combination patterns with the one of the evaluation values that has the local maximum value, from among the plurality of combination patterns; and
repeatedly, redetermining the evaluation values individually related to the plurality of combination patterns by excluding, from the sample set data, the samples of which the label information indicates the predetermined value among the samples that satisfy the another one of the combination patterns with the another one of the evaluation values that is maximum, and extracting the another one of the combination patterns with the another one of the evaluation values that is maximum, based on the redetermined evaluation values.

5. A pattern extraction device comprising:
a sample acquisition unit that acquires sample set data associated with both of data item values individually related to a plurality of data items and label information regarding a predetermined event;
a combination pattern acquisition unit that acquires a plurality of combination patterns, each of which is a combination of one or more of the data item values;
a determination unit that determines evaluation values for each of the plurality of combination patterns, based on a number of the samples that satisfy each of the combination patterns among the samples indicated by the sample set data and a ratio of the samples whose label information indicates a predetermined value among the samples that satisfy each of the combination patterns; and
an extraction unit that extracts one of the combination patterns that corresponds to one of the evaluation values that has a local maximum value in the evaluation values individually related to the plurality of combination patterns.

6. The pattern extraction device according to claim 5, wherein the determination unit determines the evaluation values that have a property of increasing as the ratio becomes higher when the number of the samples that satisfy each of the combination patterns is kept unchanged, and increasing as the number of the samples that satisfy each of the combination patterns becomes greater when the ratio is kept unchanged.

7. The pattern extraction device according to claim 5 or 6, wherein the extraction unit extract, among the plurality of combination patterns, when a specified evaluation value for a specified combination pattern is higher than any of a first evaluation value for a first combination pattern obtained by adding one or more of the data item values to the specified combination pattern, and a second evaluation value for a second combination pattern obtained by deleting one or more of the data item values from the specified combination pattern, the specified combination pattern as the one of the combination patterns with the one of the evaluation values that has the local maximum value.

8. The pattern extraction device according to claim 5 or 6, wherein
the extraction unit extract another one of the combination patterns with another one of the evaluation values that is maximum, as the one of the combination patterns with the one of the evaluation values that has the local maximum value, from among the plurality of combination patterns; and
the determination unit repeatedly, redetermine the evaluation values individually related to the plurality of combination patterns by excluding, from the sample set data, the samples of which the label information indicates the predetermined value among the samples that satisfy the another one of the combination patterns with the another one of the evaluation values that is maximum, and extracting the another one of the combination patterns with the another one of the evaluation values that is maximum, based on the redetermined evaluation values.

9. A pattern extraction method for a computer to execute a process comprising:
acquiring sample set data associated with both of data item values individually related to a plurality of data items and label information regarding a predetermined event;
acquiring a plurality of combination patterns, each of which is a combination of one or more of the data item values;
determining evaluation values for each of the plurality of combination patterns, based on a number of the samples that satisfy each of the combination patterns among the samples indicated by the sample set data and a ratio of the samples whose label information indicates a predetermined value among the samples that satisfy each of the combination patterns; and
extracting one of the combination patterns that corresponds to one of the evaluation values that has a local maximum value in the evaluation values individually related to the plurality of combination patterns.

10. The pattern extraction method according to claim 9, wherein the evaluation values have a property of increasing as the ratio becomes higher when the number of the samples that satisfy each of the combination patterns is kept unchanged, and increasing as the number of the samples that satisfy each of the combination patterns becomes greater when the ratio is kept unchanged.

11. The pattern extraction method according to claim 9 or 10, wherein, among the plurality of combination patterns, when a specified evaluation value for a specified combination pattern is higher than any of a first evaluation value for a first combination pattern obtained by adding one or more of the data item values to the specified combination pattern, and a second evaluation value for a second combination pattern obtained by deleting one or more of the data item values from the specified combination pattern, the specified combination pattern is extracted as the one of the combination patterns with the one of the evaluation values that has the local maximum value.

12. The pattern extraction method according to claim 9 or 10, which further causes the computer to execute processing comprising:
extracting another one of the combination patterns with another one of the evaluation values that is maximum, as the one of the combination patterns with the one of the evaluation values that has the local maximum value, from among the plurality of combination patterns; and
repeatedly, redetermining the evaluation values individually related to the plurality of combination patterns by excluding, from the sample set data, the samples of which the label information indicates the predetermined value among the samples that satisfy the another one of the combination patterns with the another one of the evaluation values that is maximum, and extracting the another one of the combination patterns with the another one of the evaluation values that is maximum, based on the redetermined evaluation values.

13. A non-transitory computer-readable storage medium storing a pattern extraction program that causes at least one computer to execute a process, the process comprising:
acquiring sample set data associated with both of data item values individually related to a plurality of data items and label information regarding a predetermined event;
acquiring a plurality of combination patterns, each of which is a combination of one or more of the data item values;
determining evaluation values for each of the plurality of combination patterns, based on a number of the samples that satisfy each of the combination patterns among the samples indicated by the sample set data and a ratio of the samples whose label information indicates a predetermined value among the samples that satisfy each of the combination patterns; and
extracting one of the combination patterns that corresponds to one of the evaluation values that has a local maximum value in the evaluation values individually related to the plurality of combination patterns.
